(19) Europäisches Patentamt
European Patent Office
Office européen des brevets

(11) EP 2 592 118 A1

(12) EUROPEAN PATENT APPLICATION
published in accordance with Art. 153(4) EPC

(43) Date of publication:
15.05.2013 Bulletin 2013/20

(51) Int Cl.:
C09B 67/20 (2006.01)          C09B 67/02 (2006.01)
C09B 67/04 (2006.01)          C09B 67/10 (2006.01)
G02B 5/22 (2006.01)

(21) Application number: 11795445.3

(22) Date of filing: 04.03.2011

(86) International application number:
PCT/JP2011/055097

(87) International publication number:
WO 2011/158537 (22.12.2011 Gazette 2011/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.06.2010 JP 2010137665

(71) Applicant: M Technique Co., Ltd.
Osaka 594-1144 (JP)

(72) Inventors:
• MAEKAWA, Masaki
Izumi-shi
Osaka 594-1144 (JP)

• HONDA, Daisuke
Izumi-shi
Osaka 594-1144 (JP)
• ENOMURA, Masakazu
Izumi-shi
Osaka 594-1144 (JP)

(74) Representative: Robertson, James Alexander
Marks & Clerk LLP
90 Long Acre
London
WC2E 9RA (GB)

(54) NOVEL QUINACRIDONE PIGMENT COMPOSITION, AND PROCESS FOR PRODUCTION OF QUINACRIDONE MICROPARTICLES

(57) Disclosed are: a quinacridone pigment composition containing quinacridone microparticles which have durability and spectral characteristics equivalent to those required for a magenta color of a dye; and a method for producing the quinacridone microparticles. Specifically disclosed are: a quinacridone pigment composition containing at least one type of quinacridone microparticles, wherein the quinacridone microparticles are characterized in that the difference between the maximum transmittance (Tmax1) and the minimum transmittance (Tmin) (i.e., Tmax1 - Tmin) is 80% or more in a transmission spectrum at 350 nm to 800 nm and the difference between the maximum transmittance (Tmax2) and the minimum transmittance (Tmin) (i.e., Tmax2 - Tmin) is 30% or more in a transmission spectrum at 350 nm to 580 nm, or that the difference between the maximum transmittance (Tmax1) and the minimum transmittance (Tmin) (i.e., Tmax1 - Tmin) is 80% or more in a transmission spectrum at 350 nm to 800 nm and the wavelength (λmax) at which the transmittance in a transmission spectrum at 350 nm to 500 nm becomes maximum is less than 430 nm; and a method for producing the quinacridone microparticles.

Figure 4

**Description**

TECHNICAL FIELD

The present invention relates to a novel quinacridone pigment composition, and a method for producing quinacridone microparticles.

BACKGROUND ART

A quinacridone or quinacridones are an organic pigment of a red-purple or a magenta color widely used in a coating material, an ink-jet ink, a color filter, a toner, and so on. It is excellent not only in color characteristics such as coloring power, transparency, and color-producing power as a color material but also in water resistance, heat resistance, and durability such as light resistance and weatherability; and thus, it is widely used in many industrial fields.

In the magenta color, it is required as its spectral characteristics that a light of a medium wavelength region (ca. 500 nm to ca. 600 nm) in a visible light region of 380 nm to 780 nm be absorbed and a light of other wavelength region be transmitted or reflected. One example of required spectral characteristics of magenta dye in a photosensitive magenta coloring composition is that, as shown in Patent Document 1, the magenta dye contained therein have a minimum transmittance in a region of 500 nm to 580 nm and have, when the transmittance thereof is 15% to 20%, a transmission curve whose transmittance at 450 nm be more than 50% and less than 70% and transmittance at 600 nm be 70% or more. In the case of the dye as shown in Patent Document 1, almost ideal spectral characteristics may be readily obtained even when it is used as a coating material, a coating film, and an ink. However, dye is generally inferior to pigment in water resistance, heat resistance, and durability such as light resistance and weatherability; and thus, it is often difficult to secure stability which lasts for long periods of time. A quinacridone pigment is excellent in durability, but, spectral characteristics such as transmission, absorption, and reflection significantly change depending on size of particles thereof because, on the contrary to dye whose coloring is made by a molecule, coloring by pigment is made by a solid (crystal) so that light scattering cannot be ignored. Accordingly, a quinacridone pigment composition having durability and spectral characteristics equivalent to the required spectral characteristics of the magenta color as mentioned above and a method for producing the same have been wanted.

One example to solve the problems mentioned above is to make pigment microparticles. Transmittance and coloring power can be improved by making particle size of pigment fine to a level where light scattering can be ignored. To make microparticles, reported are so-called a solvent milling method and a solvent salt milling method, in which treatment with beads or an inorganic salt is done, such as those described in Patent Document 2.

However, in the solvent milling method and the solvent salt milling method, crystal growth and crushing of crystals occur in parallel, so that there have been problems of not only requiring large energy but also not expressing characteristics expected as pigment nanoparticles, such as color tone, transparency, spectral characteristics, and durability, because a strong force is applied to a quinacridone pigment.

As shown in Patent Document 3, the Applicant of the present invention proposed a novel method to produce pigment nanoparticles by separating pigments between processing surfaces being capable of approaching to and separating from; but a specific method for producing nanoparticles of a quinacridone pigment was not disclosed therein.

Patent Document 1: Japanese Patent Laid-Open Publication No. 2003-344998
Patent Document 2: Japanese Patent Application Publication No. 2007-512397
Patent Document 3: International Patent Laid-Open Publication No. 2009/008388

Disclosure of Invention

Problems to be Solved by the Invention

In view of the situation mentioned above, the present invention has an object to provide; a quinacridone pigment composition which contains quinacridone microparticles having durability and spectral characteristics equivalent to the required spectral characteristics of the magenta color as mentioned above; and a method for producing the quinacridone microparticles.

Means for Solving the Problems

A first embodiment of the present invention is to provide a quinacridone pigment composition containing at least one kind of quinacridone microparticle, characterized in that difference between a maximum transmittance (Tmax1) and a minimum transmittance (Tmin) in 350 nm to 800 nm of a transmission spectrum thereof (Tmax1-Tmin) is 80% or more and difference between a maximum transmittance (Tmax2) and a minimum transmittance (Tmin) in 350 nm to 580 nm (Tmax2-Tmin) is 30% or more.

A second embodiment of the present invention is to provide a quinacridone pigment composition containing at least one kind of quinacridone microparticle, characterized in that difference between a maximum transmittance (Tmax1) and a minimum transmittance (Tmin) in 350 nm to 800 nm of a transmission spectrum thereof (Tmax1-Tmin) is 80% or more and a wavelength to give a maximum transmittance ($\lambda$max) in 350 nm to 500 nm is shorter than 430 nm.

A third embodiment of the present invention is to provide the quinacridone pigment composition according to the first or the second embodiment, characterized in that quinacridone microparticles are formed of at least one kind of unsubstituted quinacridone and 2, 9-dimethyl quinacridone.

A fourth embodiment of the present invention is to provide the quinacridone pigment composition containing quinacridone microparticles according to any of the first to the third embodiments, characterized in that the quinacridone microparticles are formed by a process comprising:

a fluid to be processed is supplied between processing surfaces being capable of approaching to and separating from each other and displacing relative to each other,

pressure of force to move in the direction of approaching, including supply pressure of the fluid to be processed and pressure applied between the rotating processing surfaces, is balanced with pressure of force to move in the direction of separation thereby keeping a minute space in a distance between the processing surfaces,

the minute space kept between two processing surfaces is used as a flow path of the fluid to be processed, thereby forming a thin film fluid of the fluid to be processed, and

the quinacridone microparticles are formed in this thin film fluid.

A fifth embodiment of the present invention is to provide the quinacridone pigment composition containing quinacridone microparticles according to any of the first to the fourth embodiments of the present invention, characterized in that a form of the quinacridone microparticles is almost spherical.

A sixth embodiment of the present invention is to provide the quinacridone pigment composition containing quinacridone microparticles according to the fifth embodiment of the present invention, characterized in that a volume-average particle diameter of the quinacridone microparticles is in a range of 1 nm to 200 nm.

A seventh embodiment of the present invention is to provide a method to produce quinacridone microparticles, the method to produce the quinacridone microparticles according to any of the first to the sixth embodiments of the present invention, characterized in that:

a fluid to be processed is supplied between processing surfaces being capable of approaching to and separating from each other and displacing relative to each other,

pressure of force to move in the direction of approaching, including supply pressure of the fluid to be processed and pressure applied between the rotating processing surfaces, is balanced with pressure of force to move in the direction of separation thereby keeping a minute space in a distance between the processing surfaces,

the minute space kept between two processing surfaces is used as a flow path of the fluid to be processed, thereby forming a thin film fluid of the fluid to be processed, and

the quinacridone microparticles are separated in this thin film fluid.

A eighth embodiment of the present invention is to provide the method for producing quinacridone microparticles according to the seventh embodiment of the present invention, characterized in that the method comprises:

a fluid pressure imparting mechanism for imparting pressure to a fluid to be processed,

at least two processing members of a first processing member and a second processing member, the second processing member being capable of relatively approaching to and separating from the first processing member, and

a rotation drive mechanism for rotating the first processing member and the second processing member relative to each other; wherein

each of the processing members is provided with at least two processing surfaces of a first processing surface and a second processing surface disposed in a position they are faced with each other,

each of the processing surfaces constitutes part of a forced flow path through which the fluid to be processed under the pressure is passed,

of the first and second processing members, at least the second processing member is provided with a pressure-receiving surface, and at least part of the pressure-receiving surface is comprised of the second processing surface,

the pressure-receiving surface receives pressure applied to the fluid to be processed by the fluid pressure imparting mechanism thereby generating force to move in the direction of separating the second processing surface from the first processing surface,

the fluid to be processed under the pressure is passed between the first and second processing surfaces being capable of approaching to and separating from each other and rotating relative to each other, whereby the fluid to be processed forms the thin film fluid, and

the quinacridone microparticles are separated in this thin film fluid.

A ninth embodiment of the present invention is to provide the method for producing quinacridone microparticles according to the eighth embodiment of the present invention, characterized in that:

one kind of fluid to be processed is introduced between the first processing surface and the second processing surface,

an another independent introduction path for another kind of fluid to be processed other than the one kind of the fluid to be processed is provided,

at least one opening leading to this introduction path is arranged in at least either one of the first processing surface or the second processing surface,

the another kind of the fluid to be processed is introduced between both the processing surfaces through this introduction path, and

the one kind of the fluid to be processed and the another kind of the fluid to be processed are mixed in the thin film fluid.

A tenth embodiment of the present invention is to provide the method for producing quinacridone microparticles according to the ninth embodiment of the present invention, characterized in that:

the opening is arranged in the downstream side of the point at which the one kind of the fluid to be processed becomes a laminar flow between both the processing surfaces, and

mixing of the fluids to be processed is done by introducing the another kind of the fluid to be processed from the opening.

Advantages

According to the present invention, provided are: a quinacridone pigment composition containing at least one kind of quinacridone microparticles, characterized in that difference between a maximum transmittance ($T_{max1}$) and a minimum transmittance ($T_{min}$) in 350 nm to 800 nm of a transmission spectrum thereof ($T_{max1}$-$T_{min}$) is 80% or more and difference between a maximum transmittance ($T_{max2}$) and a minimum transmittance ($T_{min}$) in 350 nm to 580 nm of a transmission spectrum thereof ($T_{max2}$-$T_{min}$) is 30% or more; and a method for producing the said quinacridone microparticles. In addition, provided are: a quinacridone pigment composition containing at least one kind of quinacridone microparticle, characterized in that difference between a maximum transmittance ($T_{max1}$) and a minimum transmittance ($T_{min}$) in 350 nm to 800 nm of a transmission spectrum thereof ($T_{max1}$-$T_{min}$) is 80% or more and a wavelength to give a maximum transmittance ($\lambda max$) in 350 nm to 500 nm is shorter than 430 nm; and a method for producing this quinacridone microparticle. The quinacridone pigment composition as mentioned above has spectral characteristics almost equivalent to the required spectral characteristics of the magenta color described in Patent Document 1, so that existing problems as mentioned before could be remedied.

[FIG. 1]

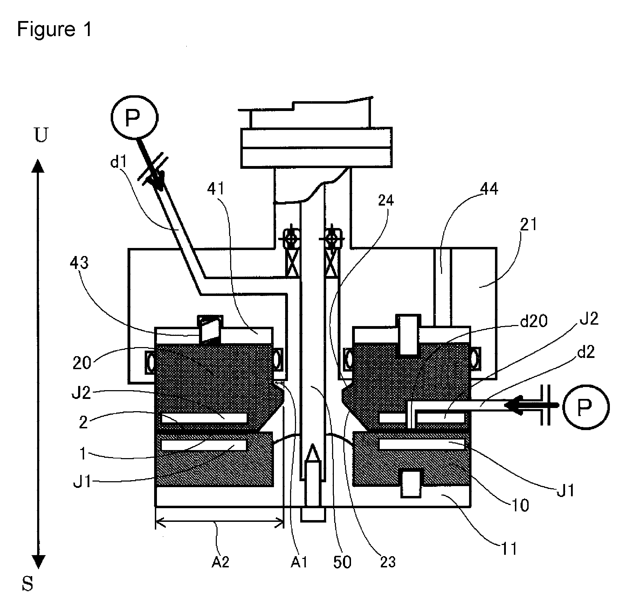

FIG. 1 is a schematic sectional view showing the fluid processing apparatus according to an embodiment of the present invention.

[FIG. 2]

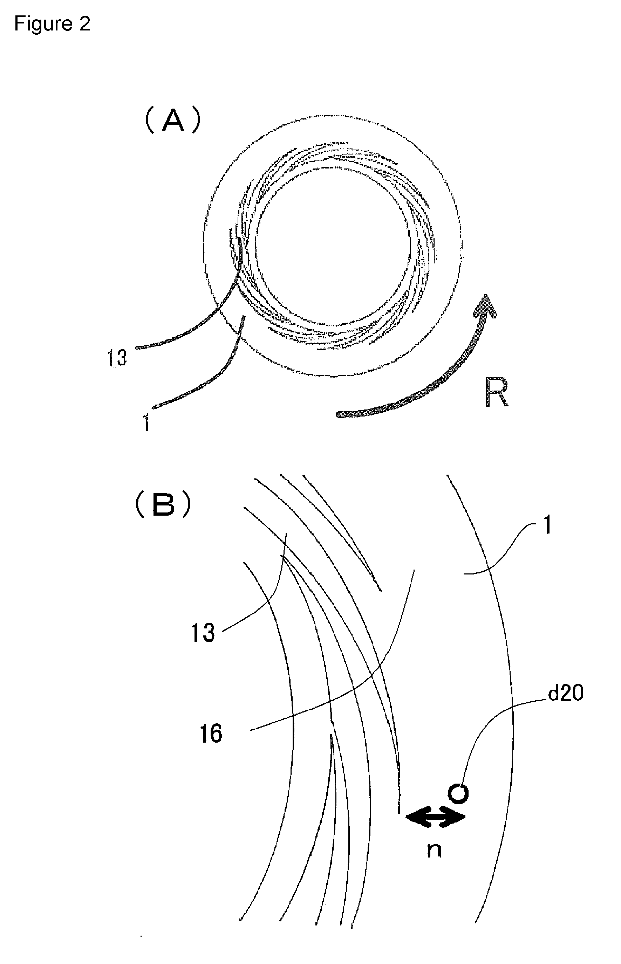

FIG. 2(A) is a schematic plane view of the first processing surface in the fluid processing apparatus shown in FIG. 1, and FIG. 2 (B) is an enlarged view showing an important part of the processing surface in the apparatus.

[FIG. 3]

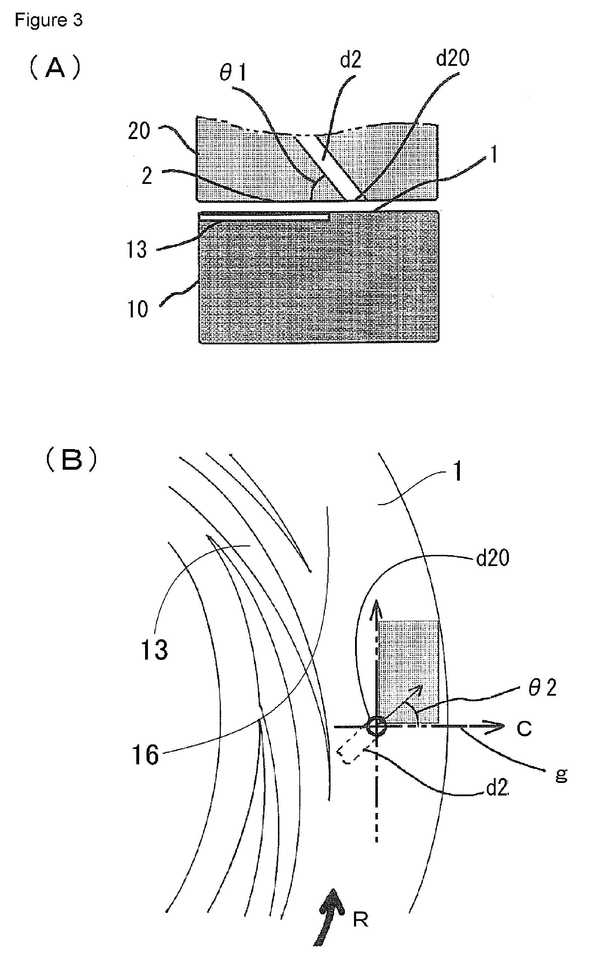

FIG. 3(A) is a sectional view of the second introduction path of the apparatus, and FIG. 3(B) is an enlarged view showing an important part of the processing surface for explaining the second introduction part.

[FIG. 4]

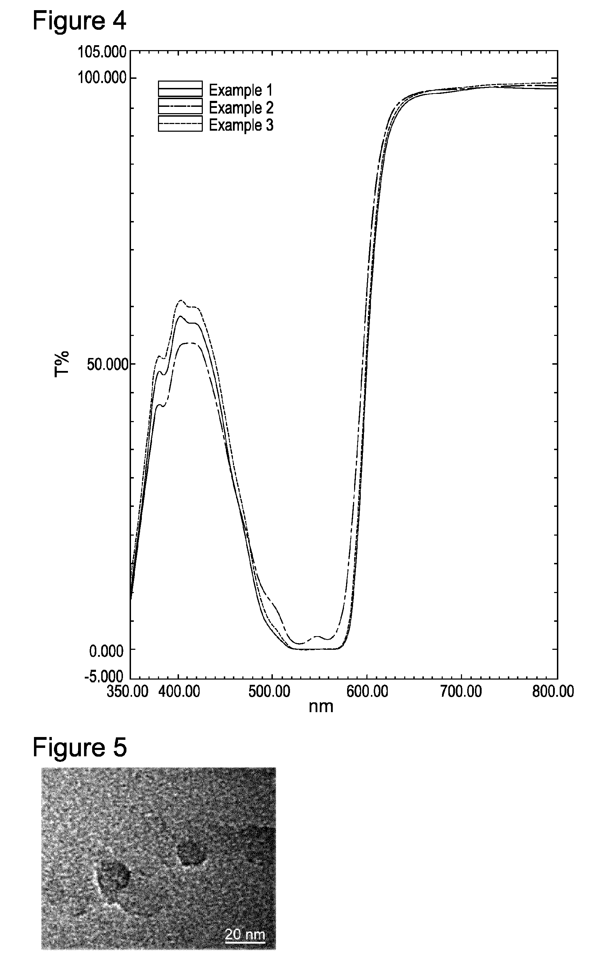

FIG. 4 shows transmission spectra of aqueous dispersion solutions of 0.026% 2,9-dimethyl quinacridone microparticles prepared in Example 1 (solid line), Example 2 (dashed-dotted line), and Example 3 (dashed line).

[FIG. 5]

FIG. 5 shows a TEM picture of the 2,9-dimethyl quinacridone microparticles prepared in Example 1 and dispersed in styrene monomer.

[FIG. 6]

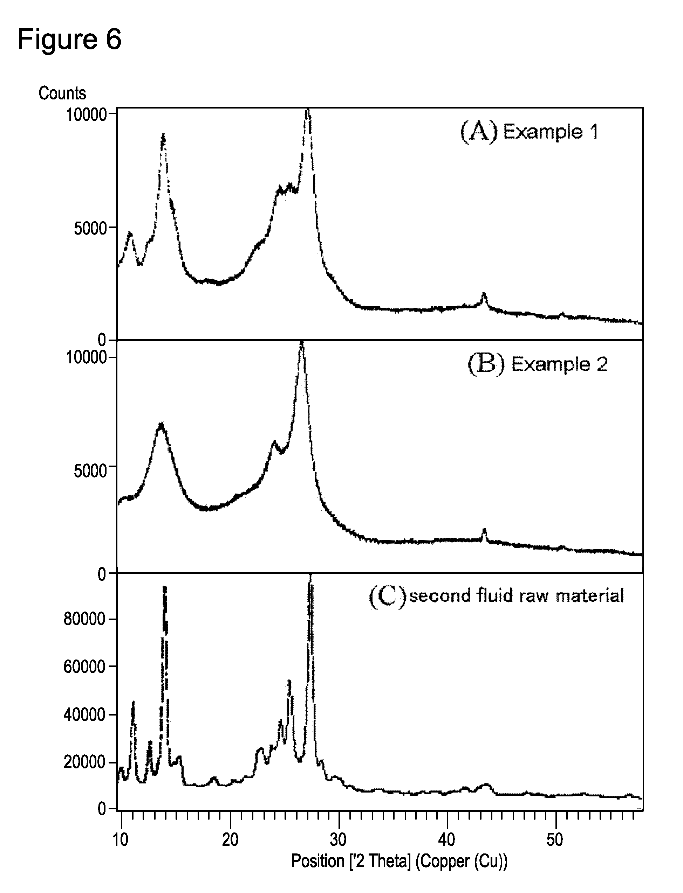

FIG. 6 shows powder X-ray diffraction spectrum charts of FIG. 6(A) the 2,9-dimethyl quinacridone microparticles prepared in Example 1, FIG. 6(B) the 2,9-dimethyl quinacridone microparticles prepared in Example 2, and FIG. 6 (C) the 2,9-dimethyl quinacridone microparticles used as a starting material.
[FIG. 7]

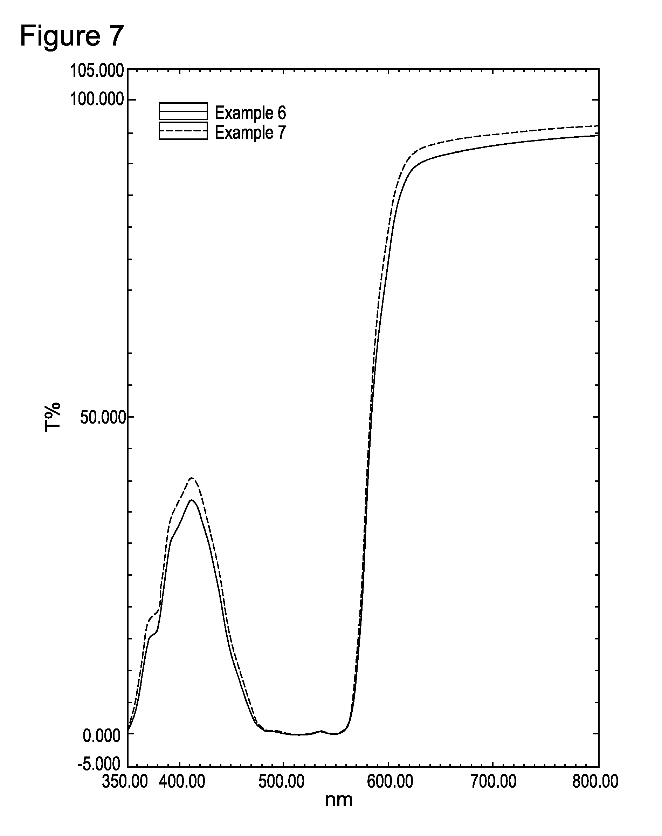

FIG. 7 shows transmission spectra of aqueous dispersion solutions of 0.026% unsubstituted quinacridone microparticles prepared in Example 6 (solid line) and Example 7 (dashed line).

MODE FOR CARRYING OUT THE INVENTION

The quinacridone microparticles to constitute the quinacridone pigment composition of the present invention is not particularly restricted; and an illustrative example thereof includes pigments of quinacridone or its derivative with the color index name of Pigment Red 122, Pigment Red 202, Pigment Red 206, Pigment Red 207, Pigment Red 209, and Pigment Violet 19. Further, an illustrative example of the quinacridone and the quinacridones include unsubstituted quinacridone, 2,9-dichloro quinacridone, 3,10-dichloro quinacridone, 4,11-dichloro quinacridone, 2,3,9,10-tetrachloro quinacridone, 2,4,9,11-tetrachloro quinacridone, 2,9-difluoro quinacridone, 2,9-dibromo quinacridone, 2,9-dimethyl quinacridone, 3,10-dimethyl quinacridone, 4,11-dimethyl quinacridone, 2,4,9,11-tetramethyl quinacridone, 2,9-di(t-butyl) quinacridone, 2,9-dihydroxyl quinacridone, 2,9-di(trifluoromethyl) quinacridone, 2,9-dimethoxy quinacridone, 2,9-diethoxy quinacridone, 2,4,9,11-tetramethoxy quinacridone, 2,9-dicarboxyl quinacridone, 2,9-dichlorohexyl quinacridone, 2,9-diphenyl quinacridone, 2,9-di(dimethylamino) quinacridone, 2,9-di(dimethylaminosulfo) quinacridone, 2,9-di(dimethylaminocarbonyl) quinacridone, 3,10-dinitro quinacridone, 2,9-dimethyl-4,11-dichloro quinacridone, 2,9-dimethyl-4,11-dicarboxy quinacridone, and 2,9-dipyridino quinacridone. The quinacridone or quinacridones mentioned above may be used singly or as a mixture of a plurality of them.
The present invention relates to a quinacridone pigment composition containing at least one kind of quinacridone microparticle having any of the transmission spectra shown in FIG. 4 and FIG. 7. In addition, the quinacridone pigment composition of the present invention includes a quinacridone derivative such as sulfonated and hydroxylated quinacridone microparticles. Further, the present invention includes a quinacridone pigment composition having a surface of the quinacridone microparticles introduced with a functional group such as a hydroxyl group and a sulfo group. In the quinacridone pigment composition of the present invention, there is no particular restriction as to the crystal type thereof.
The quinacridone pigment composition of the present invention contains at least one kind of quinacridone microparticle, wherein difference between a maximum transmittance (Tmax1) and a minimum transmittance (Tmin) in 350 nm to 800 nm of a transmission spectrum thereof (Tmax1-Tmin) is 80% or more and difference between a maximum transmittance (Tmax2) and a minimum transmittance (Tmin) in 350 nm to 580 nm of a transmission spectrum thereof (Tmax2-Tmin) is 30% or more, or difference between a maximum transmittance (Tmax1) and a minimum transmittance (Tmin) in 350 nm to 800 nm of a transmission spectrum thereof (Tmax1-Tmin) is 80% or more and a wavelength to give a maximum transmittance ($\lambda$max) in 350 nm to 500 nm is shorter than 430 nm. More preferably, the quinacridone pigment composition contains at least one kind of quinacridone microparticle, wherein difference between a maximum transmittance (Tmax1) and a minimum transmittance (Tmin) in 350 nm to 800 nm of a transmission spectrum thereof (Tmax1-Tmin) is 80% or more and less than 100% and difference between a maximum transmittance (Tmax2) and a minimum transmittance (Tmin) in 350 nm to 580 nm of a transmission spectrum thereof (Tmax2-Tmin) is 30% or more and less than 80%, or difference between a maximum transmittance (Tmax1) and a minimum transmittance (Tmin) in 350 nm to 800 nm of a transmission spectrum thereof (Tmax1-Tmin) is 80% or more and less than 100% and a wavelength to give a maximum transmittance ($\lambda$max) in 350 nm to 500 nm is shorter than 430 nm. A measurement method of the transmission spectra in the present invention is not particularly restricted. Therefore, the measurement method includes, for example, a method in which a transmission spectrum of a quinacridone pigment composition is measured as to its dispersion solution in an aqueous medium or in an organic solvent, and a method in which a measurements are done after it is applied on a glass, a transparent electrode, or a film.
A method for producing the quinacridone pigment composition obtained by the present invention is not particularly restricted. A build-up method as well as a break-down method represented by a crushing method may be used. Alternatively, it may be newly synthesized.
As one example of a method for producing the quinacridone pigment composition of the present invention, in the method for producing the quinacridone microparticles by mixing a fluid which contains a quinacridone solution having a quinacridone pigment dissolved in a solvent with a fluid which contains a solvent capable of being a poor solvent having lower solubility to the quinacridone pigment than the solvent in which the quinacridone pigment is dissolved, whereby separating the quinacridone pigment, the method characterized in that each of the foregoing fluids are mixed in a thin film fluid formed between processing surfaces being capable of relatively approaching to and separating from each other and disposed in a position they are faced with each other, wherein at least one of the surfaces rotates relative to the other, thereby separating the quinacridone microparticles in the thin film fluid may be used. Hereinafter, this producing method will be explained. However, this producing method is a mere one example, and thus, the present invention is not limited to this producing method.

A starting material quinacridone pigment to be dissolved in a solvent to prepare a quinacridone solution is not particularly restricted; and thus, a quinacridone, quinacridones, or a quinacridone pigment which are the same kind as the quinacridone microparticles to constitute the foregoing quinacridone pigment composition may be used. The quinacridone and quinacridones mentioned above may be used singly or as a mixture of plurality of them to form a solid solution. Meanwhile, a crystal type of the quinacridone before dissolving into the afore-mentioned solvent is not particularly restricted; and thus, various crystal types of quinacridones may be used. In addition, a quinacridone before a step to make it a pigment and a quinacridone containing an amorphous quinacridone may be used. A particle diameter thereof is not particularly restricted, either.

Hereinbelow, a fluid processing apparatus usable in this method will be explained.

The fluid processing apparatus shown in FIG. 1 to FIG. 3 is similar to the apparatus described in Patent Document 3, with which a material to be processed is processed between processing surfaces in processing members arranged so as to be able to approach to and separate from each other, at least one of which rotates relative to the other; wherein, of the fluids to be processed, a first fluid to be processed, i.e., a first fluid, is introduced into between the processing surfaces, and a second fluid to be processed, i.e., a second fluid, is introduced into between the processing surfaces from a separate path that is independent of the flow path introducing the afore-mentioned first fluid and has an opening leading to between the processing surfaces, whereby the first fluid and the second fluid are mixed and stirred between the processing surfaces. Meanwhile, in FIG. 1, a reference character U indicates an upside and a reference character S indicates a downside; however, up and down, frond and back and right and left shown therein indicate merely a relative positional relationship and does not indicate an absolute position. In FIG. 2 (A) and FIG. 3(B), reference character R indicates a rotational direction. In FIG. 3(C), reference character C indicates a direction of centrifugal force (a radial direction).

In this apparatus provided with processing surfaces arranged opposite to each other so as to be able to approach to and separate from each other, at least one of which rotates relative to the other, at least two kinds of fluids to be processed are used as the fluid to be processed, wherein at least one fluid thereof contains at least one kind of material to be processed, a thin film fluid is formed by converging the respective fluids between these processing surfaces, and the material to be processed is processed in this thin film fluid. With this apparatus, a plurality of fluids to be processed may be processed as mentioned above; but a single fluid to be processed may be processed as well.

This fluid processing apparatus is provided with two processing members of a first processing member 10 and a second processing member 20 arranged opposite to each other, wherein at least one of these processing members rotates. The surfaces arranged opposite to each other of the respective processing members 10 and 20 are made to be the respective processing surfaces. The first processing member 10 is provided with a first processing surface 1 and the second processing member 20 is provided with a second processing surface 2.

The processing surfaces 1 and 2 are connected to a flow path of the fluid to be processed and constitute part of the flow path of the fluid to be processed. Distance between these processing surfaces 1 and 2 can be changed as appropriate; and thus, the distance thereof is controlled so as to form a minute space usually less than 1 mm, for example, in the range of about 0.1 $\mu$m to about 50 $\mu$m. With this, the fluid to be processed passing through between the processing surfaces 1 and 2 becomes a forced thin film fluid forced by the processing surfaces 1 and 2.

When a plurality of fluids to be processed are processed by using this apparatus, the apparatus is connected to a flow path of the first fluid to be processed whereby forming part of the flow path of the first fluid to be processed; and part of the flow path of the second fluid to be processed other than the first fluid to be processed is formed. In this apparatus, the two paths converge into one, and two fluids to be processed are mixed between the processing surfaces 1 and 2 so that the fluids may be processed by reaction and so on. It is noted here that the term "process(ing)" includes not only the embodiment wherein a material to be processed is reacted but also the embodiment wherein a material to be processed is only mixed or dispersed without accompanying reaction.

To specifically explain, this apparatus is provided with a first holder 11 for holding the first processing member 10, a second holder 21 for holding the second processing member 20, a surface-approaching pressure imparting mechanism, a rotation drive member, a first introduction part d1, a second introduction part d2, and a fluid pressure imparting mechanism p.

As shown in FIG. 2 (A), in this embodiment, the first processing member 10 is a circular body, or more specifically a disk with a ring form. Similarly, the second processing member 20 is a disk with a ring form. A material of the processing members 10 and 20 is not only metal but also ceramics, sintered metal, abrasion-resistant steel, sapphire, other metal subjected to hardening treatment, and rigid material subjected to lining, coating, or plating. In the processing members 10 and 20 of this embodiment, at least part of the first and the second surfaces 1 and 2 arranged opposite to each other is mirror-polished.

Roughness of this mirror polished surface is not particularly limited; but surface roughness Ra is preferably 0.01 $\mu$m to 1.0 $\mu$m, or more preferably 0.03 $\mu$m to 0.3 $\mu$m.

At least one of the holders can rotate relative to the other holder by a rotation drive mechanism such as an electric motor (not shown in drawings). A reference numeral 50 in FIG. 1 indicates a rotary shaft of the rotation drive mechanism; in this embodiment, the first holder 11 attached to this rotary shaft 50 rotates, and thereby the first processing member 10 attached to this first holder 11 rotates relative to the second processing member 20. As a matter of course, the second processing member 20 may be made to rotate, or the both may be made to rotate. Further in this embodiment, the first and second holders 11 and 21 may be fixed, while the first and second processing members 10 and 20 may be made to rotate relative to the first and second holders 11 and 21.

At least any one of the first processing member 10 and the second processing member 20 is able to approach to and separate from at least any other member, thereby the processing surfaces 1 and 2 are able to approach to and separate from each other.

In this embodiment, the second processing member 20 approaches to and separates from the first processing member 10, wherein the second processing member 20 is accepted in an accepting part 41 arranged in the second holder 21 so as to be able to rise and set. However, as opposed to the above, the first processing member 10 may approach to and separate from the second processing member 20, or both of the processing members 10 and 20 may approach to and separate from each other.

This accepting part 41 is a concave portion for mainly accepting that side of the second processing member 20 opposite to the second processing surface 2, and this concave portion is a groove being formed into a circle, i.e., a ring when viewed in a plane. This accepting part 41 accepts the second processing member 20 with sufficient clearance so that the second processing member 20 may rotate. Meanwhile, the second processing member 20 may be arranged so as to be movable only parallel to the axial direction; alternatively, the second processing member 20 may be made movable, by making this clearance larger, relative to the accepting part 41 so as to make the center line of the processing member 20 inclined, namely unparallel, to the axial direction of the accepting part 41, or movable so as to deviate the center line of the processing member 20 and the center line of the accepting part 41 toward the radius direction. It is preferable that the second processing member 20 be accepted by a floating mechanism so as to be movable in the three dimensional direction, as described above.

The fluids to be processed are introduced into between the processing surfaces 1 and 2 from the first introduction part d1 and the second introduction part d2 under the state that pressure is applied thereto by a fluid pressure imparting mechanism p consisting of various pumps, potential energy, and so on. In this embodiment, the first introduction part d1 is a flow path arranged in the center of the circular second holder 21, and one end thereof is introduced into between the processing surfaces 1 and 2 from inside the circular processing members 10 and 20. Through the second introduction part d2, the second fluid to be processed for reaction to the first fluid to be processed is introduced into between the processing surfaces 1 and 2. In this embodiment, the second introduction part d2 is a flow path arranged inside the second processing member 20, and one end thereof is open at the second processing surface 2. The first fluid to be processed which is pressurized with the fluid pressure imparting mechanism p is introduced from the first introduction part d1 to the space inside the processing members 10 and 20 so as to pass through between the first and second processing surfaces 1 and 2 to outside the processing members 10 and 20. From the second introduction part d2, the second fluid to be processed which is pressurized with the fluid pressure imparting mechanism p is provided into between the processing surfaces 1 and 2, whereat this fluid is converged with the first fluid to be processed, and there, various fluid processing such as mixing, stirring, emulsification, dispersion, reaction, deposition, crystallization, and separation are effected, and then the fluid thus processed is discharged from the processing surfaces 1 and 2 to outside the processing members 10 and 20. Meanwhile, an environment outside the processing members 10 and 20 may be made negative pressure by a vacuum pump.

The surface-approaching pressure imparting mechanism mentioned above supplies the processing members with force exerting in the direction of approaching the first processing surface 1 and the second processing surface 2 each other. In this embodiment, the surface-approaching pressure imparting mechanism is arranged in the second holder 21 and biases the second processing member 20 toward the first processing member 10.

The surface-approaching pressure imparting mechanism is a mechanism to generate a force (hereinafter "surface-approaching pressure") to press the first processing surface 1 of the first processing member 10 and the second processing surface 2 of the second processing member 20 in the direction to make them approach to each other. By the balance between this surface-approaching pressure and the force to separate the processing surfaces 1 and 2 from each other, i.e., the force such as the fluid pressure, a thin film fluid having minute thickness in a level of nanometer or micrometer is generated. In other words, the distance between the processing surfaces 1 and 2 is kept in a predetermined minute distance by the balance between these forces.

In the embodiment shown in FIG. 1, the surface-approaching pressure imparting mechanism is arranged between the accepting part 41 and the second processing member 20. Specifically, the surface-approaching pressure imparting mechanism is composed of a spring 43 to bias the second processing member 20 toward the first processing member 10 and a biasing-fluid introduction part 44 to introduce a biasing fluid such as air and oil, wherein the surface-approaching pressure is provided by the spring 43 and the fluid pressure of the biasing fluid. The surface-approaching pressure may be provided by any one of this spring 43 and the fluid pressure of this biasing fluid; and other forces such as magnetic force and gravitation may also be used. The second processing member 20 recedes from the first processing member 10 thereby making a minute space between the processing surfaces by separating force, caused by viscosity and the pressure of the fluid to be processed applied by the fluid pressure imparting mechanism p, against the bias of this surface-approaching pressure imparting mechanism. By this balance between the surface-approaching pressure and the separating force as mentioned above, the first processing surface 1 and the second processing surface 2 can be set with the precision of a micrometer level; and thus the minute space between the processing surfaces 1 and 2 may be set. The separating force mentioned above includes fluid pressure and viscosity of the fluid to be processed, centrifugal force by rotation of the processing members, negative pressure when negative pressure is applied to the biasing-fluid introduction part 44, and spring force when the spring 43 works as a pulling spring. This surface-approaching pressure imparting mechanism may be arranged also in the first processing member 10, in place of the second processing member 20, or in both of the processing members.

To specifically explain the separation force, the second processing member 20 has the second processing surface 2 and a separation controlling surface 23 which is positioned inside the processing surface 2 (namely at the entering side of the fluid to be processed into between the first and second processing surfaces 1 and 2) and next to the second processing surface 2. In this embodiment, the separation controlling surface 23 is an inclined plane, but may be a horizontal plane. The pressure of the fluid to be processed acts to the separation controlling surface 23 to generate force directing to separate the second processing member 20 from the first processing member 10. Therefore, the second processing surface 2 and the separation controlling surface 23 constitute a pressure receiving surface to generate the separation force.

In the example shown in FIG. 1, an approach controlling surface 24 is formed in the second processing member 20. This approach controlling surface 24 is a plane opposite, in the axial direction, to the separation controlling surface 23 (upper plane in FIG. 1) and, by action of pressure applied to the fluid to be processed, generates force of approaching the second processing member 20 toward the first processing member 10.

Meanwhile, the pressure of the fluid to be processed exerted on the second processing surface 2 and the separation controlling surface 23, i.e., the fluid pressure, is understood as force constituting an opening force in a mechanical seal. The ratio (area ratio A1/A2) of a projected area A1 of the approach controlling surface 24 projected on a virtual plane perpendicular to the direction of approaching and separating the processing surfaces 1 and 2, that is, to the direction of rising and setting of the second processing member 20 (axial direction in FIG. 1), to a total area A2 of the projected area of the second processing surface 2 of the second processing member 20 and the separation controlling surface 23 projected on the virtual plane is called as balance ratio K, which is important for control of the opening force. This opening force can be controlled by the pressure of the fluid to be processed, i.e., the fluid pressure, by changing the balance line, i.e., by changing the area A1 of the approach controlling surface 24.

Sliding surface actual surface pressure P, i.e., the fluid pressure out of the surface-approaching pressures, is calculated according to the following equation:

$$P = P1 \times (K - k) + Ps$$

Here, P1 represents the pressure of a fluid to be processed, i.e., the fluid pressure, K represents the balance ratio, k represents an opening force coefficient, and Ps represents a spring and back pressure.

By controlling this balance line to control the sliding surface actual surface pressure P, the space between the processing surfaces 1 and 2 is formed as a desired minute space, thereby forming a fluid film of the fluid to be processed so as to make the processed substance such as a product fine and to effect uniform processing by reaction. Meanwhile, the approach controlling surface 24 may have a larger area than the separation controlling surface 23, though this is not shown in the drawing.

The fluid to be processed becomes a forced thin film fluid by the processing surfaces 1 and 2 that keep the minute space therebetween, whereby the fluid is forced to move out from the circular, processing surfaces 1 and 2. However, the first processing member 10 is rotating; and thus, the mixed fluid to be processed does not move linearly from inside the circular, processing surfaces 1 and 2 to outside thereof, but does move spirally from the inside to the outside thereof by a resultant vector acting on the fluid to be processed, the vector being composed of a moving vector toward the radius direction of the circle and a moving vector toward the circumferential direction.

Meanwhile, a rotary shaft 50 is not only limited to be placed vertically, but may also be placed horizontally, or at a slant. This is because the fluid to be processed is processed in a minute space between the processing surfaces 1 and 2 so that the influence of gravity can be substantially eliminated. In addition, this surface-approaching pressure imparting mechanism can function as a buffer mechanism of micro-vibration and rotation alignment by concurrent use of the foregoing floating mechanism with which the second processing member 20 may be held displaceably.

In the first and second processing members 10 and 20, the temperature thereof may be controlled by cooling or heating at least any one of them; in FIG. 1, an embodiment having temperature regulating mechanisms J1 and J2 in the first and second processing members 10 and 20 is shown. Alternatively, the temperature may be regulated by cooling or heating the introducing fluid to be processed. These temperatures may be used to separate the processed substance or may be set so as to generate Benard convection or Marangoni convection in the fluid to be processed between the first and second processing surfaces 10 and 20.

As shown in FIG. 2, in the first processing surface 1 of the first processing member 10, a groove-like depression 13 extended toward an outer side from the central part of the first processing member 10, namely in a radius direction, may be formed. The depression 13 may be, as a plane view, curved or spirally extended on the first processing surface 1 as shown in FIG. 2(B), or, though not shown in the drawing, may be extended straight radially, or bent at a right angle, or jogged; and the depression may be continuous, intermittent, or branched. In addition, this depression 13 may be formed also on the second processing surface 2, or on both of the first and second processing surfaces 1 and 2. By forming the depression 13 as mentioned above, the micro-pump effect can be obtained so that the fluid to be processed may be sucked into between the first and second processing surfaces 10 and 20.

The base end of the depression 13 reaches preferably inner circumference of the first processing member 10. The front end of the depression 13 extends in an outer circumferential direction of the first processing surface 1 with the depth thereof (cross-sectional area) being gradually shallower as going from the base end toward the front end. Between the front end of the depression 13 and the outer periphery of the first processing surface 1 is arranged a flat surface 16 not having the depression 13.

When an opening d20 of the second introduction part d2 is arranged in the second processing surface 2, the arrangement is done preferably at a position opposite to the flat surface 16 of the first processing surface 1 arranged at a position opposite thereto.

This opening d20 is arranged preferably in the downstream (outside in this case) of the depression 13 of the first processing surface 1. The opening is arranged especially preferably at a position opposite to the flat surface 16 located nearer to the outer diameter than a position where the direction of flow upon introduction by the micro-pump effect is changed to the direction of a spiral and laminar flow formed between the processing surfaces. Specifically, in FIG. 2(B), a distance n from the outermost side of the depression 13 arranged in the first processing surface 1 in the radial direction is preferably about 0.5 mm or more. Especially in the case of separating nanosized microparticles (nanoparticles) from a fluid, it is preferable that mixing of a plurality of fluids to be processed and separation of the nanoparticles therefrom be effected under the condition of a laminar flow.

This second introduction part d2 may have directionality. For example, as shown in FIG. 3(A), the direction of introduction from the opening d20 of the second processing surface 2 is inclined at a predetermined elevation angle ($\theta$1) relative to the second processing surface 2. The elevation angle ($\theta$1) is set at more than 0° and less than 90°, and when the reaction speed is high, the angle ($\theta$1) is preferably set in the range of 1° to 45°.

In addition, as shown in FIG. 3(B), introduction from the opening d20 of the second processing surface 2 has directionality in a plane along the second processing surface 2. The direction of introduction of this second fluid is in the outward direction departing from the center in a radial component of the processing surface and in the forward direction in a rotation component of the fluid between the rotating processing surfaces. In other words, a predetermined angle ($\theta$2) exists facing the rotation direction R from a reference line g, which is the line to the outward direction and in the radial direction passing through the opening d20. This angle ($\theta$2) is also set preferably at more than 0° and less than 90°.

This angle ($\theta$2) can vary depending on various conditions such as the type of fluid, the reaction speed, viscosity, and the rotation speed of the processing surface. In addition, it is also possible not to give the directionality to the second introduction part d2 at all.

In the embodiment shown in FIG. 1, kinds of the fluid to be processed and numbers of the flow path thereof are set two respectively; but they may be one, or three or more. In the embodiment shown in FIG. 1, the second fluid is introduced into between the processing surfaces 1 and 2 from the introduction part d2; but this introduction part may be arranged in the first processing member 10 or in both. Alternatively, a plurality of introduction parts may be arranged relative to one fluid to be processed. The opening for introduction arranged in each processing member is not particularly restricted in its form, size, and number; and these may be changed as appropriate. The opening of the introduction part may be arranged just before the first and second processing surfaces 1 and 2 or in the side of further upstream thereof.

In the apparatus mentioned above, treatment such as separation and deposition, or crystallization takes place under a forced and uniform mixing between the processing surfaces 1 and 2 arranged opposite to each other so as to be able to approach to and separate from each other, at least one of which rotates relative to the other, as shown in FIG. 1. A particle diameter and mono-dispersibility of the quinacridone microparticles can be controlled by appropriately controlling rotation number of the processing members 10 and 20, fluid velocity, distance between the processing surfaces, raw material concentration, dispersion medium, and so on.

Hereinafter, the reaction of production of quinacridone microparticles in the present invention is described in more detail.

First, a fluid containing a solvent capable of being a poor solvent to a quinacridone solution is introduced as a first fluid through one flow path, that is, the first introduction part d1, into the space between the processing surfaces 1 and 2 arranged to be opposite to each other so as to be able to approach to and separate from each other, at least one of which rotates relative to the other, thereby forming a thin film fluid comprised of the first fluid between the processing surfaces.

Then, from the second introduction part d2 which is a separate flow path, as the second fluid, a fluid containing a quinacridone solution having a quinacridone pigment (this is a reaction material) dissolved is directly introduced into the thin film fluid formed by the first fluid. Meanwhile, of the first fluid and the second fluid, in at least any one of them is contained an organic solvent generally capable of transforming a crystal type of a copper phthalocyanine to other than the $\alpha$-type crystal (this solvent will be mentioned later).

As described above, the first fluid and the second fluid are instantly mixed with maintaining a state of a ultrathin film between the processing surfaces 1 and 2, the distance of which is regulated by the pressure balance between the supply pressure of the fluids and the pressure exerted between the rotating processing surfaces, thereby enabling to carry out the reaction producing the quinacridone microparticles.

To effect the reaction between the processing surfaces 1 and 2, the second fluid may be introduced through the first introduction part d1 and the first fluid through the second introduction part d2, as opposed to the above description. That is, the expression "first" or "second" for each solvent has a meaning for merely discriminating an $n^{th}$ solvent among a plurality of solvents present, and third or more solvents can also be present.

A combination of the first fluid and the second fluids is not particularly restricted; a fluid which contains a quinacridone solution and a fluid which contains a solvent capable of being a poor solvent having lower solubility to a quinacridone pigment than the solvent in which a quinacridone pigment is dissolved may be used.

For example, a solvent for dissolving a quinacridone pigment is not particularly limited, and in the case of an acidic aqueous solution, for example, sulfuric acid, hydrochloric acid, nitric acid or trifluoroacetic acid can be used. Further, amide solvents such as 1-methyl-2-pyrrolidinone, 1,3-dimethyl-2-imidazolidinone, 2-pyrrolidinone, $\varepsilon$-caprolactam, formamide, N-methylformamide, N,N-dimethylformamide, acetamide, N-methylacetamide, N,N-dimethylacetamide, N-methylpropanamide, and hexamethyl phosphoric triamide; dimethyl sulfoxide; pyridine; or thier mixture can be used. In addition, a solution having a quinacridone dissolved into a general organic solvent including the above-mentioned amide solvents, dimethyl sulfoxide, and pyridine that are added with an alkaline or an acidic substance may be used as a quinacridone solution. An alkaline substance which is added to the organic solvent includes sodium hydroxide, potassium hydroxide, sodium methoxide, and sodium ethoxide, or the like. An acid substance, as the same described above, includes sulfuric acid, hydrochloric acid, nitric acid, trifluoroacetic acid, phosphoric acid, or the like.

As to the solvent capable of being a poor solvent to separate quinacridone microparticles, a solvent having lower solubility to the quinacridone pigment than the solvent into which the copper phthalocyanine has been dissolved. An illustrative example of the solvent like this includes water, an alcohol compound solvent, an amide compound solvent, a ketone compound solvent, an ether compound solvent, an aromatic compound solvent, carbon disulfide, an aliphatic compound solvent, a nitrile compound solvent, a sulfoxide compound solvent, a halogenated compound solvent, an ester compound solvent, a pyridine compound solvent, an ionic liquid solvent, a carboxylic acid compound solvent, a sulfonic acid compound solvent, and a sulfolane compound solvent. These solvents may be used singly or as a mixture of two or more of them.

In addition, a dispersing agent such as a block copolymer, a macromolecular polymer, and a surfactant may be contained in any one of the fluid which contains a quinacridone solution and the fluid which contains a solvent capable of being a poor solvent having lower solubility to a quinacridone pigment than the solvent in which a quinacridone pigment is dissolved, or both fluids. Further, the foregoing dispersing agent may be contained in a third fluid which is different from any of the fluid which contains a quinacridone solution and the fluid which contains a solvent capable of being a poor solvent having lower solubility to a quinacridone pigment than the solvent in which a quinacridone pigment is dissolved.

As surfactants and dispersants, various commercial products for use in dispersing pigments can be used. The surfactants and dispersants include, but are not limited to, those based on dodecylbenzenesulfonic acid such as sodium dodecyl sulfate or Neogen R-K (Dai-ichi Kogyo Seiyaku Co., Ltd.), Solsperse 20000, Solsperse 24000, Solsperse 26000, Solsperse 27000, Solsperse 28000, and Solsperse 41090 (manufactured by Avecia Corporation), Disperbyk-160, Disperbyk-161, Disperbyk-162, Disperbyk-163, Disperbyk-166, Disperbyk-170, Disperbyk-180, Disperbyk-181, Disperbyk-182, Disperbyk-183, Disperbyk-184, Disperbyk-190, Disperbyk-191, Disperbyk-192, Disperbyk-2000, Disperbyk-2001, Disperbyk-2163, and Disperbyk-2164 (manufactured by BYK-Chemie), Polymer 100, Polymer 120, Polymer 150, Polymer 400, Polymer 401, Polymer 402, Polymer 403, Polymer 450, Polymer 451, Polymer 452, Polymer 453, EFKA-46, EFKA-47, EFKA-48, EFKA-49, EFKA-1501, EFKA-1502, EFKA-4540, and EFKA-4550 (manufactured by EFKA Chemical Corp.), Flowlen DOPA-158, Flowlen DOPA-22, Flowlen DOPA-17, Flowlen G-700, Flowlen TG-720W, Flowlen-730W, Flowlen-740W, and Flowlen 745W (manufactured by Kyoeisha Chemical Co., Ltd.), Ajisper PA-111, Ajisper PB-711, Ajisper PB-811, Ajisper PB-821, and Ajisper PW-911 (manufactured by Ajinomoto Co. Inc.), Johncryl 678, Johncryl 679, and Johncryl 62 (manufactured by Johnson Polymer B.V., and AQUALON KH-10, HITENOL NF-13 (manufactured by DAI-ICHI KOGYO SEIYAKU CO.,LTD.). These products may be used alone or in combination of two or more thereof.

The case of executing surface treatment to quinacridone microparticles will be explained hereinafter.

Surface treatment by introducing a modification group at least to a surface of quinacridone microparticles may be done by containing a surface-modification agent into fluids to be processed which are introduced between the processing surfaces 1 and 2. The surface-modification agent may be contained in any one of the fluid which contains a quinacridone solution (first fluid) and the fluid which contains a solvent capable of being a poor solvent (second fluid) or both fluids; or alternatively, the surface-modification agent may be contained in a third fluid which is different from any of the fluid which contains a solvent capable of being the poor solvent and the fluid which contains the quinacridone solution. Here, combination of the first fluid and the second fluid is not particularly limited to the above example.

A kind of the modification group to be introduced as a surface-modification agent to at least the pigment surface is not particularly restricted; in the case that purpose of the surface treatment is to improve dispersibility, the modification group may be selected in accordance with, for example, a solvent for intended dispersion and kind of a dispersing agent. An example of the modification group includes those having a polar group such as an acidic group and a basic group, a salt structure of the foregoing polar groups, any one of a highly polar atom such as oxygen and sulfur and a highly polarizability structure introduced with an aromatic ring and the like or both, a hydrogen-bonding group, a hetero-ring, and an aromatic ring. An example of the acidic group includes a hydroxyl group (a hydroxy group), a sulfonic acid group (a sulfo group), a carboxylic acid group, a phosphoric acid group, and a boric acid group. An example of the basic group includes an amino group. An example of the hydrogen-bonding group includes a urethane moiety, a thiourethane moiety, a urea moiety, and a thiourea moiety.

In the case that purpose of the surface treatment is other than to improve dispersibility, for example, in the case that a surface of the quinacridone microparticles is made water-repellent, lipophilic, or compatible with an organic solvent, the surface of the quinacridone microparticles discharged from between the processing surfaces 1 and 2 may be made lipophilic by containing a surface-modifying agent having a lipophilic functional group in any one of the first fluid and the second fluid or both so that the lipophilic functional group may be introduced as the modification group. Further, the foregoing surface-modification agent may be contained in a third fluid which is different from any of the first fluid and the second fluid.

In the case that a surface of the quinacridone microparticles is subjected to the treatment of attaching a resin as the surface-modifying agent, at least a part of a surface of the quinacridone microparticles discharged from between the processing surfaces 1 and 2 may be covered with the resin by containing the resin in any one of the first fluid and the second fluid or both, whereby carrying out, for example, a hydrophilic treatment. Further, the foregoing resin may be contained in a third fluid which is different from any of the first fluid and the second fluid.

The foregoing surface treatment is not limited to the case in which surface modification of the quinacridone microparticles is done between the processing surfaces 1 and 2 as mentioned above; but also it may be done after discharge of the quinacridone microparticles from between the processing surfaces 1 and 2. In the latter case, after the fluid which contains the quinacridone microparticles is discharged from between the processing surfaces 1 and 2, a material to be used for surface treatment of the quinacridone microparticles is added into this discharged fluid; and then, the surface treatment of the quinacridone microparticles may be done by such procedure as stirring. Alternatively, after the fluid which contains the quinacridone microparticles is discharged, impure materials are removed by a dialysis tube or the like from the fluid which contains the quinacridone microparticles, and then, the surface treatment may be done by adding a material for the surface treatment. Further, the surface treatment may be done after the quinacridone microperticles are made to powders by drying the liquid component of the fluid discharged from between the processing surfaces 1 and 2, the fluid containing the quinacridone microparticles. Specifically, after the obtained powders of the quinacridone microparticles are dispersed in an intended solvent, a material for the surface treatment is added to the resulting dispersion solution, and then, the surface treatment may be done by such procedure as stirring.

A method for producing quinacridone microparticles in the present invention of the application (the forced ultrathin film rotary reaction method) can freely change the Reynolds number of its minute flow path and can thus form quinacridone microparticles which are monodisperse and excellent in re-dispersibility, having an objective particle size, particle shape and crystal form. By their self-dischargeability, there is no clogging with products even in a reaction accompanied by separation, and a large pressure is not necessary. Accordingly, the method in the present invention is superior in safety, hardly mixed in with impurities, excellent in washing performance, thus can stably produce quinacridone microparticles. In addition, the method can be scaled up depending on the intended amount of production, thus can provide a highly productive method for producing quinacridone pigment microparticles.

A quinacridone pigment composition according to the present invention relates to a blue color, and it can be used in a wide range for, for example, a coating material, an inkjet ink, a thermal transfer ink, a toner, a colored resin, and a color filter.

Hereinafter, the present invention will be explained by Examples of producing; the quinacridone microparticles by using an apparatus based on the same principle as disclosed in the Patent Document 3 filed by the Applicant of the present invention, wherein, in the quinacridone microparticles, difference between a maximum transmittance (Tmax1) and a minimum transmittance (Tmin) in 350 nm to 800 nm of the transmission spectrum thereof (Tmax1-Tmin) is 80% or more and difference between a maximum transmittance (Tmax2) and a minimum transmittance (Tmin) in 350 nm to 580 nm (Tmax2-Tmin) is 30% or more; and the quinacridone microparticles wherein difference between a maximum transmittance (Tmax1) and a minimum transmittance (Tmin) in 350 nm to 800 nm of the transmission spectrum thereof (Tmax1-Tmin) is 80% or more and a wavelength to give a maximum transmittance (λmax) in 350 nm to 500 nm is shorter than 430 nm. However, the present invention is not limited to the following Examples.

By using the apparatus as shown in FIG. 1 wherein uniform stirring and mixing are done in a thin film fluid formed between the processing surfaces 1 and 2 which are disposed in a position they are faced with each other so as to be able to approach to and separate from each other, at least one of which rotates relative to the other, a 2,9-dimethyl quinacridone solution having 2,9-dimethyl quinacridone dissolved in a solvent and a solvent capable of being a poor solvent to separate 2,9-dimethyl quinacridone microparticles are joined together and uniformly mixed in the thin film fluid thereby separating the 2,9-dimethyl quinacridone microparticles. In addition, by using the apparatus as shown in FIG. 1 wherein uniform stirring and mixing are done in a thin film fluid formed between the processing surfaces 1 and 2 which are disposed in a position they are faced with each other so as to be able to approach to and separate from each other, at least one of which rotates relative to the other, a unsubstituted quinacridone solution having a unsubstituted quinacridone dissolved in a solvent and a solvent capable of being a poor solvent to separate unsubstituted quinacridone microparticles are joined together and uniformly mixed in the thin film fluid thereby separating the unsubstituted quinacridone microparticles.

In the following examples, the term "from the center" means "through the first introduction part d1" in the processing apparatus shown in FIG. 1, the first fluid refers to the first processed fluid, and the second fluid refers to the second processed fluid introduced "through the second introduction part d2" in the processing apparatus shown in FIG. 1. Additionally, "%" indicates "% by weight" in this context.

(Volume-average Particle Size)

Particle size distribution was measured by using a particle size distribution measuring instrument (trade name: Nanotrac UPA-UT151, manufactured by Nikkiso Co., Ltd.), and the volume-average particle size was adopted.

(Powder X-ray Diffraction: XRD)

Powder X-ray Diffraction was measured by a full-automatic multipurpose X-ray diffraction instrument (trade name: X'Pert PRO MPD, manufactured by PANalytical B.V.). Diffraction intensity was measured within a range of diffractin angle 2 theta = 10 degree to 60 degree.

(Transmission spectrum)

Transmission spectrum in a wavelength range of 350 nm to 800 nm was measured with a UV visible spectrophotometer UV-2450 (manufactured by Shimadzu Corp.).

(Examples 1 to 5)

Methanol or pure water was introduced as a first fluid from the center into between the processing surfaces 1 and 2 with supply pressure of 0.30 MPaG and rotation speed in 300 rpm to 3600 rpm, together with, as the second fluid, a 2,9-dimethyl quinacridone solution having 2,9-dimethyl quinacridone (HOST PARM PINK E(-TS): C. I. Pigment Red 122, manufactured by Clariant) dissolved in concentrated sulfuric acid (98%). A dispersion solution of the 2,9-dimethyl quinacridone microparticles was discharged from between the processing surfaces 1 and 2. The discharged 2,9-dimethyl quinacridone microparticles were loosely aggregated and spun down by centrifugal separation (×26000 G). Supernatant after the centrifugal separation was removed; and then, after the 2, 9-dimethyl quinacridone microparticles were dispersed by adding pure water, centrifugal separation was repeated to wash the 2,9-dimethyl quinacridone microparticles. A finally obtained paste of the 2, 9-dimethyl quinacridone microparticles was dried at 30°C under vacuum of -0.1 MPaG. XRD of powders of the 2,9-dimethyl quinacridone microparticles after drying was measured. The paste of the 2,9-dimethyl quinacridone microparticles before drying was subjected to dispersion treatment by adding sodium dodecyl sulfate (SDS, manufactured by Kanto Chemical Co., Inc.) as a surfactant. The dispersion solution of the 2,9-dimethyl quinacridone microparticles after the dispersion treatment was subjected to measurement of the particle diameter distribution thereof by using pure water as a solvent. Part of the aqueous dispersion solution of the 2, 9-dimethyl quinacridone microparticles was diluted by pure water; and then, transmission spectrum of the dispersion solution thereof with the concentration of 0.026% by weight was measured. Transmission spectra of Examples 1 to 3 are shown in FIG. 4.

**EP 2 592 118 A1**

In Examples 1 to 5, a kind of the first fluid, concentration of the second fluid, rotation speed, temperature of the sending solution (temperature just before introduction of respective fluids into the processing apparatus), and introduction rate (flow amount) (unit: mL/minute) were changed; and the results as to the volume-average particle diameter by particle size distribution measurement, difference between a maximum transmittance (Tmax1) and a minimum transmittance (Tmin) in 350 nm to 800 nm of the transmission spectrum thereof (Tmax1-Tmin), difference between a maximum transmittance (Tmax2) and a minimum transmittance (Tmin) in 350 nm to 580 nm (Tmax2-Tmin), and a wavelength to give a maximum transmittance (λmax) in 350 nm to 500 nm are shown in Table 1. A TEM picture of the 2,9-dimethyl quinacridone microparticles prepared in Example 1 which is dispersed in styrene monomer is shown in FIG. 5. It can be seen that form of the 2,9-dimethyl quinacridone microparticles thereby obtained is almost spherical. In FIG. 6, powder X-ray diffraction spectrum of the 2,9-dimethyl quinacridone microparticles prepared in Example 1 is shown in (A), powder X-ray diffraction spectrum of the 2,9-dimethyl quinacridone microparticles prepared in Example 2 is shown in (B), and powder X-ray diffraction spectrum of the 2, 9-dimethyl quinacridone microparticles used as the starting material in the second fluid is shown in (C). As can be seen in Table 1, provided in the present invention are: a quinacridone pigment composition containing the 2, 9-dimethyl quinacridone microparticles, wherein difference between a maximum transmittance (Tmax1) and a minimum transmittance (Tmin) in 350 nm to 800 nm of the transmission spectrum thereof (Tmax1-Tmin) is 80% or more and difference between a maximum transmittance (Tmax2) and a minimum transmittance (Tmin) in 350 nm to 580 nm (Tmax2-Tmin) is 30% or more; and a method for producing the 2,9-dimethyl quinacridone microparticles. In addition, provided are: a quinacridone pigment composition containing 2,9-dimethyl quinacridone microparticles, wherein difference between a maximum transmittance (Tmax1) and a minimum transmittance (Tmin) in 350 nm to 800 nm of the transmission spectrum thereof (Tmax1-Tmin) is 80% or more and a wavelength to give a maximum transmittance (λmax) in 350 nm to 500 nm is shorter than 430 nm; and a method for producing the 2,9-dimethyl quinacridone microparticles. Accordingly, a quinacridone pigment composition which contains the 2,9-dimethyl quinacridone microparticles having spectral characteristics almost equivalent to the required spectral characteristics of the magenta color described in Patent Document 1, and a method for producing the 2,9-dimethyl quinacridone microparticles could be provided. Further, the 2,9-dimethyl quinacridone microparticles, which constitutes the quinacridone pigment composition, having the volume-average particle diameter thereof being 1 nm to 200 nm, with the particle diameter being controlled, could be prepared; and thus, expression of the color characteristics such as intended color tone and coloring power can be expected.

[Table 1]

| Example | Rotation speed | First fluid | | | Second fluid | | | Particle diameter measurement result | Transmission spectrum | | |
|---|---|---|---|---|---|---|---|---|---|---|---|
| | (rpm) | Solvent | Flow rate | Temp | Solvent | Flow rate | Temp | Volume-average particle diameter | Tmax1-Tmin | Tmax2-Tmin | λmax |
| | | | (mL/min) | (°C) | | (mL/min) | (°C) | (nm) | (%) | (%) | (nm) |
| 1 | 1700 | Methanol | 400 | 5 | 1% 2,9-dimethyl quinacridone/(98% conc. sulfuric acid) | 5 | 25 | 21.8 | 99.0 | 58.4 | 402 |
| 2 | 1700 | Pure water | 400 | 5 | | 5 | 25 | 28.6 | 96.4 | 50.1 | 406 |
| 3 | 1700 | Methanol | 400 | -10 | | 5 | 25 | 8.6 | 99.5 | 62.3 | 402 |
| 4 | 3600 | Pure water | 100 | 30 | 2% 2,9-dimethyl quinacridone/(98% conc. sulfuricacid) | 10 | 40 | 107.6 | 90.3 | 46.3 | 415 |
| 5 | 300 | Methanol | 200 | 5 | | 3 | 66 | 151.3 | 84.3 | 38.6 | 426 |

EP 2 592 118 A1

(Examples 6 to 9)

Methanol or pure water was introduced as the first fluid from the center into between the processing surfaces 1 and 2 with supply pressure of 0.30 MPaG and rotation speed of 1700 rpm, together with, as the second fluid, a unsubstituted quinacridone solution having quinacridone (Cinquasia Violet R NRT-795D: C. I. Pigment Violet 19, manufactured by CIBA) dissolved in concentrated sulfuric acid (98%). A dispersion solution of the unsubstituted quinacridone microparticles was discharged from between the processing surfaces 1 and 2. The discharged unsubstituted quinacridone microparticles were loosely aggregated and spun down by centrifugal separation ($\times$26000 G). Supernatant after the centrifugal separation was removed; and then, after the unsubstituted quinacridone microparticles were dispersed by adding pure water, centrifugal separation was repeated to wash the unsubstituted quinacridone microparticles. A finally obtained paste of the unsubstituted quinacridone microparticles was dried at 30°C under vacuum of -0.1 MPaG. XRD of powders of the unsubstituted quinacridone microparticles after drying was measured. The paste of the unsubstituted quinacridone microparticles before drying was subjected to dispersion treatment by adding sodium dodecyl sulfate (SDS, manufactured by Kanto Chemical Co., Inc.) as a surfactant. The dispersion solution of the unsubstituted quinacridone microparticles after the dispersion treatment was subjected to measurement of the particle diameter distribution thereof by using pure water as a solvent. Part of the aqueous dispersion solution of the unsubstituted quinacridone microparticles was diluted by pure water; and then, transmission spectrum of the dispersion solution thereof with concentration of 0.026% by weight was measured. Transmission spectra of Examples 6 to 7 are shown in FIG. 7.

In Examples 6 to 9, a kind of the first fluid, concentration of the second fluid, rotation speed, temperature of the sending solution (temperature just before introduction of respective fluids into the processing apparatus), and introduction rate (flow amount) (unit: mL/minute) were changed; and the results as to the volume-average particle diameter by particle size distribution measurement, difference between a maximum transmittance (Tmax1) and a minimum transmittance (Tmin) in 350 nm to 800 nm of the transmission spectrum thereof (Tmax1-Tmin), difference between a maximum transmittance (Tmax2) and a minimum transmittance (Tmin) in 350 nm to 580 nm (Tmax2-Tmin), a wavelength to give a maximum transmittance ($\lambda$max) in 350 nm to 500 nm, and crystal type based on the XRD measurement results are shown in Table 2. It can be seen that, although crystal types of the unsubstituted quinacridone microparticles are different, they have similar spectral characteristics. As can be seen in Table 2, provided in the present invention are: a quinacridone pigment composition containing the unsubstituted quinacridone microparticles, wherein difference between a maximum transmittance (Tmax1) and a minimum transmittance (Tmin) in 350 nm to 800 nm of the transmission spectrum thereof (Tmax1-Tmin) is 80% or more and difference between a maximum transmittance (Tmax2) and a minimum transmittance (Tmin) in 350 nm to 580 nm (Tmax2-Tmin) is 30% or more; and a method for producing the unsubstituted quinacridone microparticles. In addition, provided are: a quinacridone pigment composition containing the unsubstituted quinacridone microparticles, wherein difference between a maximum transmittance (Tmax1) and a minimum transmittance (Tmin) in 350 nm to 800 nm of the transmission spectrum thereof (Tmax1-Tmin) is 80% or more and a wavelength to give a maximum transmittance ($\lambda$max) in 350 nm to 500 nm is shorter than 430 nm; and a method for producing the unsubstituted quinacridone microparticles. Accordingly, a quinacridone pigment composition which contains the unsubstituted quinacridone microparticles having spectral characteristics almost equivalent to the required spectral characteristics of the magenta color described in Patent Document 1, and a method for producing the unsubstituted quinacridone microparticles could be provided. Further, the unsubstituted quinacridone microparticles, which constitute the quinacridone pigment composition, having the volume-average particle diameter thereof being 1 nm to 200 nm, with the particle diameter being controlled, could be prepared; and thus, expression of the color characteristics such as intended color tone and coloring power can be expected.

[Table 2]

| Example | Rotation speed | First fluid | | | Second fluid | | | Particle diameter measurement result | Transmission spectrum | | | XRD measurement result |
|---|---|---|---|---|---|---|---|---|---|---|---|---|
| | | Solvent | Flow rate | Temp | Solvent | Flow rate | Temp | Volume-average particle diameter | Tmax1-Tmin | Tmax2-Tmin | λmax | Crystal type |
| | (rpm) | | (mL/min) | (°C) | | (mL/min) | (°C) | (nm) | (%) | (%) | (nm) | (Type) |
| 6 | 1700 | Pure water | 200 | 25 | 1% quinacridone/(98% conc. sulfuric acid) | 5 | 25 | 33.4 | 93.4 | 36.5 | 412 | γ |
| 7 | | | | 5 | | 5 | 25 | 25.6 | 96.4 | 40.2 | 412 | γ |
| 8 | | Methanol | 400 | -10 | | 5 | 25 | 24.1 | 98.6 | 50.1 | 414 | β |
| 9 | | | | -20 | 2% quinacridone/(98% conc. sulfuric acid) | 10 | 24.3 | 25.2 | 98.8 | 67.3 | 408 | γ |

EP 2 592 118 A1

Explanation of Reference Numerals

| | |
|---|---|
| 1 | first processing surface |
| 2 | second processing surface |
| 10 | first processing member |
| 11 | first holder |
| 20 | second processing member |
| 21 | second holder |
| 23 | separation-regulating surface |
| d1 | first introduction part |
| d2 | second introduction part |
| d20 | opening |
| p | fluid pressure imparting mechanism |

## Claims

1. A quinacridone pigment composition containing at least one kind of quinacridone microparticle, **characterized in that** difference between a maximum transmittance (Tmax1) and a minimum transmittance (Tmin) in 350 nm to 800 nm of a transmission spectrum thereof (Tmax1-Tmin) is 80% or more and difference between a maximum transmittance (Tmax2) and a minimum transmittance (Tmin) in 350 nm to 580 nm (Tmax2-Tmin) is 30% or more.

2. A quinacridone pigment composition containing at least one kind of quinacridone microparticle, **characterized in that** difference between a maximum transmittance (Tmax1) and a minimum transmittance (Tmin) in 350 nm to 800 nm of a transmission spectrum thereof (Tmax1-Tmin) is 80% or more and a wavelength to give a maximum transmittance (λmax) in 350 nm to 500 nm is shorter than 430 nm.

3. The quinacridone pigment composition according to any of claims 1 or 2, **characterized in that** quinacridone microparticles are formed of at least one kind of unsubstituted quinacridone and 2,9-dimethyl quinacridone.

4. The quinacridone pigment composition containing quinacridone microparticles according to any of claims 1 or 2, **characterized in that** the quinacridone microparticles are formed by a process comprising:

   a fluid to be processed is supplied between processing surfaces being capable of approaching to and separating from each other and displacing relative to each other,
   pressure of force to move in the direction of approaching, including supply pressure of the fluid to be processed and pressure applied between the rotating processing surfaces, is balanced with pressure of force to move in the direction of separation thereby keeping a minute space in a distance between the processing surfaces,
   the minute space kept between two processing surfaces is used as a flow path of the fluid to be processed, thereby forming a thin film fluid of the fluid to be processed, and
   the quinacridone microparticles are formed in this thin film fluid.

5. The quinacridone pigment composition containing quinacridone microparticles according to any of claims 1 or 2, **characterized in that** a form of the quinacridone microparticles is almost spherical.

6. The quinacridone pigment composition containing quinacridone microparticles according to claim 5, **characterized in that** a volume-average particle diameter of the quinacridone microparticles is in a range of 1 nm to 200 nm.

7. A method to produce quinacridone microparticles, the method to produce the quinacridone microparticles according to any of claims 1 or 2, **characterized in that**:

   a fluid to be processed is supplied between processing surfaces being capable of approaching to and separating from each other and displacing relative to each other,
   pressure of force to move in the direction of approaching, including supply pressure of the fluid to be processed and pressure applied between the rotating processing surfaces, is balanced with pressure of force to move in the direction of separation thereby keeping a minute space in a distance between the processing surfaces, the minute space kept between two processing surfaces is used as a flow path of the fluid to be processed, thereby forming a thin film fluid of the fluid to be processed, and the quinacridone microparticles are separated in this thin film fluid.

8. The method for producing quinacridone microparticles according to claim 7, **characterized in that** the method comprises:

a fluid pressure imparting mechanism for imparting pressure to a fluid to be processed, at least two processing members of a first processing member and a second processing member, the second processing member being capable of relatively approaching to and separating from the first processing member, and a rotation drive mechanism for rotating the first processing member and the second processing member relative to each other; wherein each of the processing members is provided with at least two processing surfaces of a first processing surface and a second processing surface disposed in a position they are faced with each other, each of the processing surfaces constitutes part of a forced flow path through which the fluid to be processed under the pressure is passed, of the first and second processing members, at least the second processing member is provided with a pressure-receiving surface, and at least part of the pressure-receiving surface is comprised of the second processing surface, the pressure-receiving surface receives pressure applied to the fluid to be processed by the fluid pressure imparting mechanism thereby generating force to move in the direction of separating the second processing surface from the first processing surface, the fluid to be processed under the pressure is passed between the first and second processing surfaces being capable of approaching to and separating from each other and rotating relative to each other, whereby the fluid to be processed forms the thin film fluid, and the quinacridone microparticles are separated in this thin film fluid.

9. The method for producing quinacridone microparticles according to claim 8, **characterized in that**:

one kind of fluid to be processed is introduced between the first processing surface and the second processing surface, an another independent introduction path for another kind of fluid to be processed other than the one kind of the fluid to be processed is provided, at least one opening leading to this introduction path is arranged in at least either one of the first processing surface or the second processing surface, the another kind of the fluid to be processed is introduced between both the processing surfaces through this introduction path, and the one kind of the fluid to be processed and the another kind of the fluid to be processed are mixed in the thin film fluid.

10. The method for producing quinacridone microparticles according to claim 9, **characterized in that**:

the opening is arranged in the downstream side of the point at which the one kind of the fluid to be processed becomes a laminar flow between both the processing surfaces, and mixing of the fluids to be processed is done by introducing the another kind of the fluid to be processed from the opening.

Figure 1

Figure 2

（A）

13

1

R

（B）

1

13

16

d20

O

n

Figure 3

（A）

（B）

## Figure 4

## Figure 5

## Figure 6

# Figure 7

<div align="center">**INTERNATIONAL SEARCH REPORT**</div>

| International application No. |
| --- |
| PCT/JP2011/055097 |

A.   CLASSIFICATION OF SUBJECT MATTER
*C09B67/20*(2006.01)i, *C09B67/02*(2006.01)i, *C09B67/04*(2006.01)i, *C09B67/10*
(2006.01)i, *G02B5/22*(2006.01)i

According to International Patent Classification (IPC) or to both national classification and IPC

B.   FIELDS SEARCHED

Minimum documentation searched (classification system followed by classification symbols)
C09B67/20, C09B67/02, C09B67/04, C09B67/10, G02B5/22

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | JP 2003-178879 A  (Sony Corp.), 27 June 2003 (27.06.2003), chemical formula 1; fig. 10; paragraphs [0024], [0029] (Family: none) | 1-3,5-6 |
| X | JP 2009-082902 A  (M Technique Co., Ltd.), 23 April 2009 (23.04.2009), claims; paragraph [0167]; examples A2, A3, A4; fig. 25 to 27 & JP 2010-189661 A        & EP 2180021 A1 & EP 2184109 A1          & EP 2184110 A1 & WO 2009/008388 A1      & WO 2009/008393 A1 & WO 2009/008394 A1 | 1-10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 March, 2011 (22.03.11) | 05 April, 2011 (05.04.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/055097 |

C (Continuation). DOCUMENTS CONSIDERED TO BE RELEVANT

| Category* | Citation of document, with indication, where appropriate, of the relevant passages | Relevant to claim No. |
|---|---|---|
| X | WO 2009/008393 A1 (M Technique Co., Ltd.), 15 January 2009 (15.01.2009), claims; paragraph [0167]; examples A2, A3, A4; fig. 25 to 27 & JP 2009-82902 A & JP 2010-189661 A & EP 2184109 A1 & EP 2180021 A1 & EP 2184110 A1 & WO 2009/008388 A1 & WO 2009/008394 A1 | 1-10 |
| X | WO 2009/008388 A1 (M Technique Co., Ltd.), 15 January 2009 (15.01.2009), claims; paragraph [0191]; examples 2 to 4; fig. 25 to 27 & JP 2009-82902 A & JP 2010-189661 A & JP 2009-242785 A & JP 4461304 B & EP 2180021 A1 & EP 2184109 A1 & EP 2184110 A1 & WO 2009/008393 A1 & WO 2009/008394 A1 & WO 2010/035861 A1 & WO 2010/100794 A1 | 1-10 |
| A | JP 2003-344998 A (Fuji Photo Film Co., Ltd.), 03 December 2003 (03.12.2003), claims (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003344998 A
- JP 2007512397 A

- JP 2009008388 A